Europäisches Patentamt

European Patent Office

Office européen des brevets

(19)

(11) Numéro de publication: **0 012 654**
**B1**

(12) **FASCICULE DE BREVET EUROPEEN**

(45) Date de publication du fascicule du brevet: **06.01.82**

(21) Numéro de dépôt: **79400937.3**

(22) Date de dépôt: **30.11.79**

(51) Int. Cl.³: **F 22 B 33/18, F 22 B 21/36**

(54) **Appareil de chauffe fournissant de la vapeur d'eau et du gaz chaud et application à une installation de raffinage.**

(30) Priorité: **06.12.78 FR 7834357**

(43) Date de publication de la demande:
**25.06.80 Bulletin 80/13**

(45) Mention de la délivrance du brevet:
**06.01.82 Bulletin 82/1**

(84) Etats contractants désignés:
**DE GB IT NL**

(56) Documents cités:
**FR - A - 1 503 354**
**FR - A - 2 048 971**
**US - A - 3 202 137**
**US - A - 3 743 488**

**CHEMICAL ENGINEERING PROGRESS, vol. 74, no. 7. juillet 1978, New York (US) T. BAILEY et F. M. WALL "Ethylene Furnace Design", pages 45—60.**

(73) Titulaire: **CREUSOT-LOIRE**
**42 rue d'Anjou**
**F-75008 Paris (FR)**

(72) Inventeur: **Tillequin, Jean**
**15 Square de Clignancourt**
**F-75018 Paris (FR)**

(74) Mandataire: **Saint-Martin, René et al,**
**CREUSOT-LOIRE 15 rue Pasquier**
**F-75383 Paris Cedex 08 (FR)**

Courier Press, Leamington Spa, England.

## Appareil de chauffe fournissant de la vapeur d'eau et du gaz chaud et application à une installation de raffinage

La présente invention se rapporte à un appareil de chauffe apte à fournir de la vapeur d'eau et un gaz réchauffé à une installation de traitement de produits chimiques, notamment pétroliers ou pétrochimiques utilisant cette vapeur et ce gaz chaud.

L'appareil selon l'invention s'applique notamment à une installation de raffinage du type comprenant des unités de distillation et de reformage catalytique et une turbine à vapeur de production d'énergie électique ou mécanique.

Dans de nombreuses installations de traitement de produits chimiques il est nécessaire de disposer à la fois de vapeur d'eau et d'un gaz chaud utilisé généralement dans les réactions. La vapeur d'eau est utilisée pour fournir de la chaleur aux réactions chimiques ou pour réchauffer certains produits. Elle peut servir à alimenter des éjecteurs de vapeur. Elle sert aussi à alimenter une turbine à vapeur fournissant de l'énergie mécanique ou électrique.

Ainsi, dans une unité de raffinage de produits pétroliers, les unités de distillation fractionnée sous pression ou sous vide et les unités de craquage catalytique ou de reformage catalytique nécessitent des apports calorifiques et exigent que les produits qui entrent soient réchauffés. Dans une unité de distillation atmosphérique par exemple, le pétrole brut, après avoir été préchauffé, est chauffé à une température comprise entre 350° et 370°C. La chaîne de reformage catalytique fonctionne à une température comprise entre 460° et 580°C. Les raffineries actuelles sont équipées, en plus de la ou des chaudières fournissant la vapeur, de fours de procédés qui servent à chauffer les produits avant ou pendant les réactions ou traitements.

On a proposé d'utiliser une chaudière à vapeur fonctionnant à une pression supérieure à 120 bars pour alimenter les colonnes de distillation qui jouent le rôle de condenseurs. La condensation de vapeur d'eau à haute pression et haute température assure la distillation du brut. Un autre circuit de vapeur à pression élevée alimente une turbine à contrepression dans laquelle la vapeur est détendue à différents niveaux de pression qui correspondent à différents niveaux de températures de condensation. Ces différentes vapeurs détendues sont utilisées pour des réchauffages, par exemple pour le chauffage du pétrole brut avant son entrée dans les colonnes. Ce procédé permet d'améliorer, de façon substantielle, le bilan énergétique de la raffinerie. Toutefois les gaz utilisés dans la chaîne de reformage catalytique sont réchauffés dans des fours de procédés ce qui conduit à certains inconvénients. Ces fours ont en effet un faible rendement. Par ailleurs la température du gaz alimentant le reformage catalytique peut varier en fonction des surchauffes accidentelles qui sont inévitables dans un four. Enfin la dispersion de fours et de chaudières dans la raffinerie complique l'exploitation et fait que la surface occupée par les équipements thermiques est importante.

Le brevet français 2 048 971 montre un appareil de chauffage comportant des circuits de tubes fournissant de la vapeur et un circuit de tubes permettant de réchauffer un gaz, ces circuits étant échauffés dans un même courant de fumées. Cette conception ne permet pas de régler la répartition calorifique entre le circuit parcouru par la vapeur et le circuit parcouru par le gaz, ni d'isoler ce dernier circuit. Par ailleurs les tubes dans lesquels s'écoule le gaz ne sont pas protégés du rayonnement des flammes pour éviter les surchauffes accidentelles.

L'invention apporte une solution aux inconvénients précités. Elle a pour objet un appareil de chauffe destiné à une installation de traitement de produits chimiques utilisant de la vapeur d'eau surchauffée et du gaz chaud et permettant d'obtenir une consommation énergétique réduite si on la compare à la consommation des installations existantes. Les fours de procédés qui équipent habituellement les installations actuelles peuvent être réduits en nombre. L'invention a particulièrement pour objet un appareil de chauffe fournissant de la vapeur d'eau surchauffée et du gaz chaud qui assure une économie énergétique, une bonne régulation de la température du gaz et une exploitation simpliée. L'invention a pour objet également l'application de cet appareil à une installation de raffinage.

Conformément à l'invention, l'appareil de chauffe comporte une chambre de combustion d'où sortent des fumées qui circulent dans une enceinte en chauffant au passage un faisceau de tubes vaporisateurs qui fournissent de la vapeur d'eau à un faisceau de tubes surchauffeurs donnant de la vapeur d'eau surchauffée et un faisceau de tubes parcourus par un gaz et il est essentiellement caractérisé par le fait qu'il comporte une cloison divisant la dite enceinte en deux chambres parcourues chacune par un courant de fumées et dont l'une contient le faisceau parcouru par le gaz et dont l'autre contient un faisceau de tubes surchauffeurs.

Selon une caractéristique de l'invention, il comporte de part et d'autre de la cloison, des registres contrôlant les débits de fumées au travers de chacune des deux chambres.

Selon une autre caractéristique de l'invention les circuits d'eau et de vapeur sont timbrés à au moins 120 bars.

D'autres caractéristiques et avantages de l'invention ressortiront de la description qui va suivre et qui se réfère aux dessins annexés.

La figure 1 est une coupe horizontale de l'appareil de chauffe selon l'invention.

La figure 2 est une coupe verticale longitudinale selon A—A de la figure 1.

La figure 3 est une coupe verticale longitudinale selon B—B de la figure 1.

La figure 4 est une coupe verticale transversale selon C—C des figures 1 à 3.

La figure 5 est une coupe verticale transversale selon D—D des figures 1 à 3.

L'appareil selon l'invention est intégré dans une installation comprenant des unités qui utilisent de la vapeur d'eau et un gaz chaud qui participe aux réactions.

Ainsi les unités peuvent être des unités de distillation ou de reformage catalytique ou encore une turbine à contrepression qui fournit de l'énergie mécanique ou électrique. La vapeur détendue qui sort de la turbine est utilisée de manière connue pour diverses opérations, notamment pour le chauffage de produits.

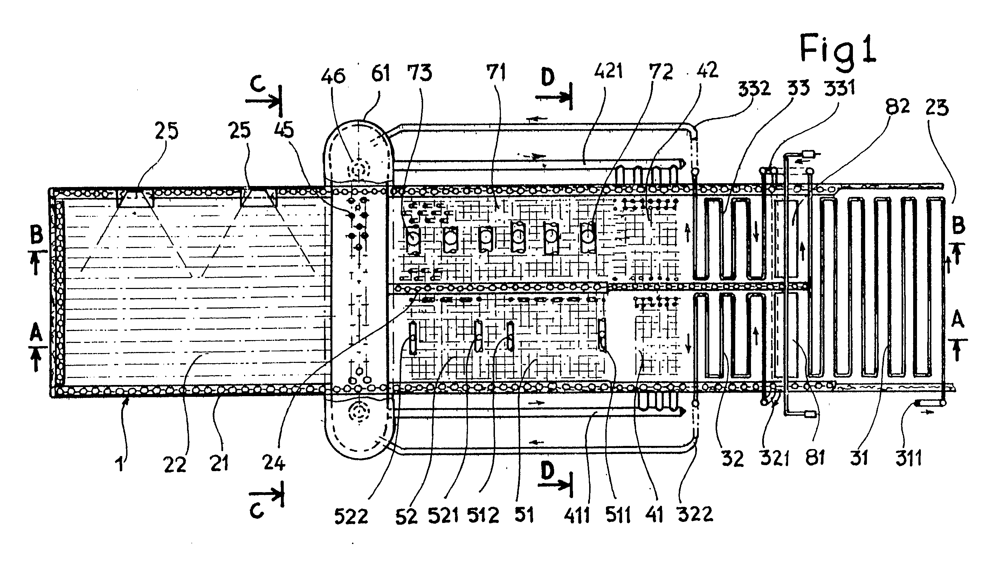

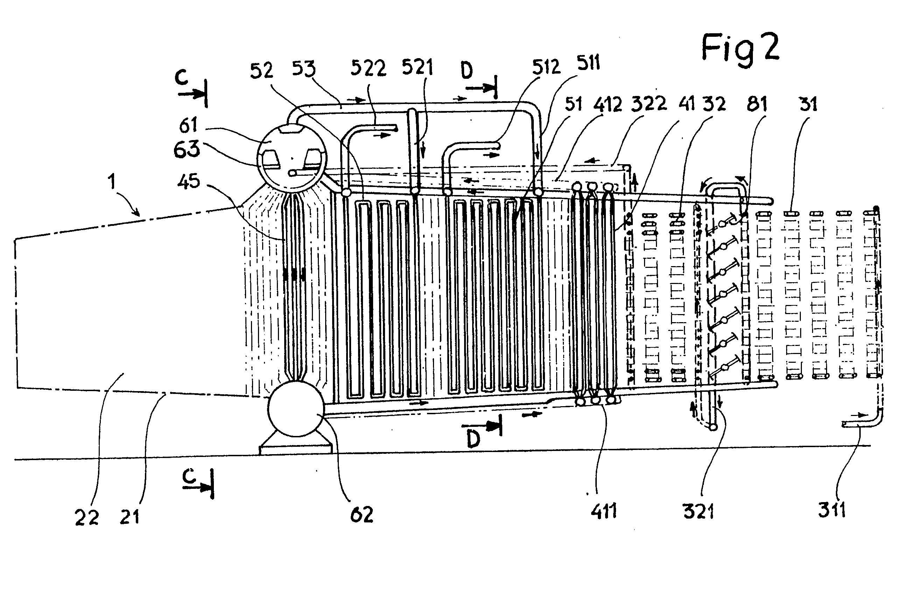

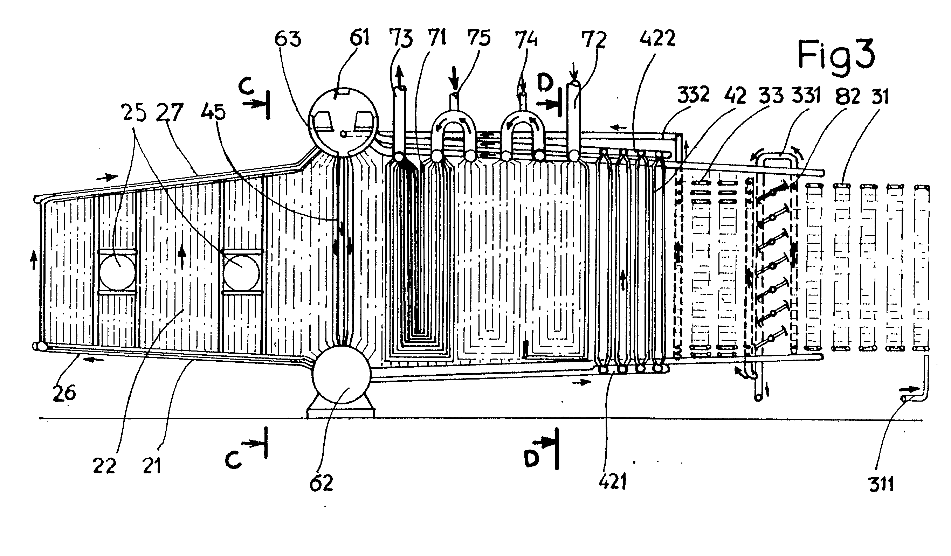

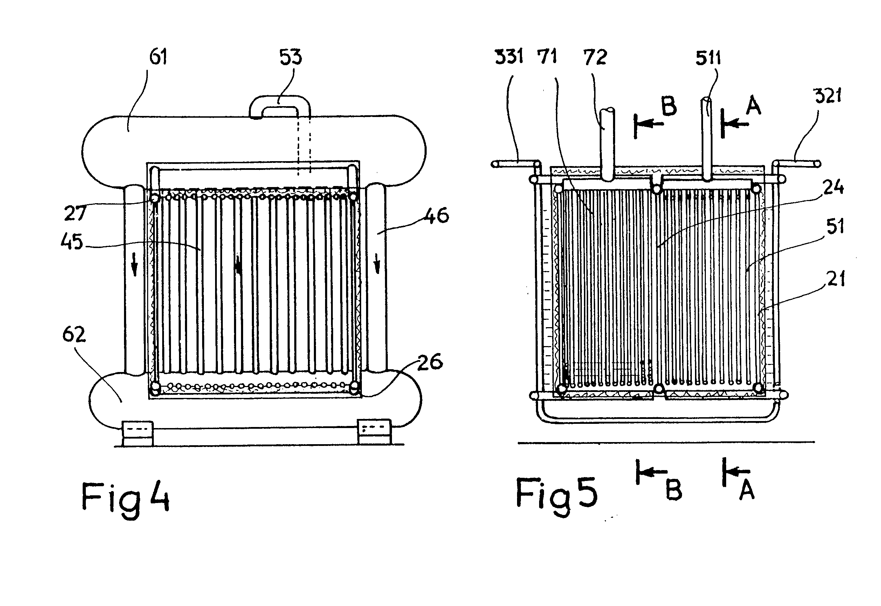

L'appareil de chauffe représenté sur les figures 1 à 5, fournit de la vapeur d'eau surchauffée et, par ailleurs, un gaz chaud.

L'appareil de chauffe, repéré 1 dans son ensemble, est chauffé par des brûleurs 25 disposés sur le côté d'une chambre de combustion ou foyer 22. Les fumées sortent de la chambre 22 et circulent dans une enceinte 21 les canalisant. Elles s'évacuent de l'appareil par une sortie 23 par tirage naturel ou par tirage mécanique pressurisé, aspiré ou équilibré. Différents circuits ou faisceaux de tubes, repérés 31, 32, 33, 41, 42, 51, 52 sont disposés dans l'enceinte 21 où ils sont chauffés au passage par les fumées. Ces faisceaux sont parcourus par de l'eau à l'état de liquide ou de vapeur. Un circuit ou faiseau de tubes 71, parcouru par un gaz, est également logé dans l'enceinte de manière à être chauffé par les fumées provenant du foyer ou de la chambre de combustion 22.

Une cloison longitudinale 24 divise l'enceinte 21 en deux chambres percourues chacune par un courant de fumées parallèle à cette cloison. L'une de ces chambres contient les faisceaux surchauffeurs de vapeur 51 et 52, l'autre le faisceau de tubes 71 parcourus par le gaz à réchauffer.

Le faisceau de tubes économiseurs 31 et les faisceaux économiseurs associés 32 et 33 reçoivent l'eau d'alimentation par une arrivée d'alimentation 311. L'eau d'alimentation est de l'eau de condensation de l'eau d'appoint. Ces circuits se terminent par des conduits 322 et 332 dans un réservoir 61 situé à la partie supérieure de l'appareil. Ces circuits ou faisceaux économiseurs 31, 32 33 sont situés vers l'extrémité aval de l'appareil.

L'eau à l'état de liquide qui est contenue à la partie inférieure du réservoir 61 est l'eau réchauffée dans les faisceaux de tubes économiseurs 31 à 33 mélangée à l'eau de recirculation. Elle descend par des tubes 46 jusqu'à un collecteur de distribution 62 d'où elle est distribuée aux tubes vaporisateurs. Ces derniers sont formés par les faisceaux de tubes 41 et 42, par les parois de l'enceinte 21 au niveau de la chambre de combustion et an aval de cette dernière, par la cloison 24 et par les tubes écran 45 et ils sont alimentés en parallèle avec l'eau préchauffée. Grâce à leur position en quinconce, les tubes écran 45, tout en permettant le passage des fumées, protègent du rayonnement de la flamme les faisceaux de tubes situés immédiatement en aval de la chambre de combustion: surchauffeur 52 et rechauffeur de gaz 71.

Les faisceaux de tubes vaporisateurs 41 et 42 sont logés respectivement en aval des faisceaux 51 et 71 qui sont parcourus respectivement par la vapeur sèche et par le gaz. L'alimentation des tubes vaporisateurs 41 et 42 est assurée soit directement par le collecteur de distribution 62, soit par l'intermédiaire de conduits tels que 26, 411 et 421. A la sortie des tubes vaporisateurs, le mélange d'eau et de vapeur est conduit soit directement soit par l'intermédiaire de conduits tels que 27, 412 et 422 dans le compartiment 63 du réservoir 61.

Ce dernier qui est identique à celui d'une chaudière classique comporte un habillage interne destiné à séparer l'eau et la vapeur. La vapeur sèche sort à la partie supérieure du réservoir 61 par un conduit 53 qui la conduit à l'entrée des faisceaux de tubes 51 et 52 dans lesquels elle est surchauffée.

Le sens de circulation des fumées étant pris comme référence, les faisceaux 52 et 51 sont échauffés successivement et sont situées en aval des tubes écran 45 et d'un même côté de la cloison 24. Ils sont alimentés en parallèle, en vapeur sèche, par le conduit 53 et respectivement par les canalisations 521 et 511. Ces faisceaux surchauffeurs 52 et 51 se terminent respectivement par des canalisations 522 et 512. Le faisceau surchauffeur amont 52 fournit de la vapeur dont la température est supérieure à celle de la vapeur sortant du faisceau surchauffeur aval 51. De préférence, l'appareil de chauffe est intégré dans une installation équipée de colonnes de distillation et de reformage catalytique et d'une turbine à vapeur à contrepression. Le faisceau amont 52 fournit alors la vapeur à la turbine et le faisceau aval 51 fournit la vapeur aux colonnes de distillation.

Le faisceau de tubes 71 parcourus par le gaz à réchauffeur est logé entre les tubes écran 45 et le faisceau de tubes vaporisateurs 42 mais du côté de la cloison 24 opposé au côté des faisceaux surchauffeurs de vapeur 51 et 52.

Il comporte d'une part une entrée 72 située en aval par rapport au sens d'écoulement des fumées et d'autre part une sortie 73 située plus en amont. L'entrée 72 est reliée à une source de gaz de réaction non représentée et la sortie est reliée a l'utilisation, par exemple à l'unité de reformage. Il est prévu au moins une entrée intermédiaire de gaz, telle que 74 ou 75, située entre l'entrée principale 72 et la sortie 73. Ces entrées intermédiaires permettent, si besoin est, d'injecter du gaz de réaction non réchauffé et de régler ainsi la température de sortie du gaz.

La cloison 24 qui sépare les faisceaux surchauffeurs 51 et 52 du faisceau de réchauffage de gaz 71, se prolonge entre les faisceaux vaporisateurs 41 et 42 et les faisceaux économiseurs secondaires 32 et 33.

Ces faisceaux économiseurs secondaires sont logés en aval des faisceaux vaporisateurs 41 et 42.

A l'aval des faisceaux 32 et 33, les fumées sont refroidies aux environs de 350°C. Des registres oscillants 81 et 82 sont installés de part et d'autre de la cloison 24, en aval des faisceaux vaporisateurs et des faisceaux économiseurs secondaires, plus précisément entre ces faisceaux économiseurs secondaires 32 et 33 et le faisceau économiseur primaire 31. Ces registres contrôlent les débits des fumées au travers des chambres contenant respectivement les surchauffeurs et le réchauffeur de gaz.

La cloison 24 s'arrête au niveau des registres 81 et 82. De ce fait l'économiseur primaire 31 logé en aval des registres occupe la totalité du volume de l'enceinte et est échauffé par les fumées sortant des deux chambres séparées par la cloison 24. Côté eau, les économiseurs secondaires 32 et 33 sont branchés en parallèle sur le circuit 31 par l'intermédiaire de conduites 321 et 331.

La chambre de combustion 22 est dimensionnée de telle sorte que la température des fumées à l'entrée du faisceau de tubes 71 soit suffisante pour obtenir un réchauffement du gaz à la température voulue. Le faisceau de tubes 71 est situé dans une zone où la température des fumées est telle que le gaz est échauffé à une température comprise entre 480°C et 540°C.

Dans ces conditions, il est facile d'obtenir à partir de vapeur saturée à 160 Bars, une température de surchauffe de 480 à 510°C dans le surchauffeur 52.

Il est bien entendu que l'on peut sans sortir du cadre de l'invention imaginer des variantes et perfectionnements de détails et de même envisager l'emploi de moyens équivalents.

Il serait par exemple possible de régler la température du gaz en recyclant des fumées prélevées au niveau des registres et réinjectées en amont du circuit 71.

**Revendications**

1. Appareil de chauffe destiné à une installation utilisant de la vapeur d'eau et un gaz chaud et comprenant une chambre de combustion (22) d'où sortent des fumées qui circulent dans une enceinte (21) en chauffant au passage un faisceau de tubes vaporisateurs (41, 42) qui fournissent de la vapeur d'eau à un faisceau de tubes surchauffeurs (51, 52) donnant de la vapeur d'eau surchauffée et un faisceau de tubes (71) parcourus par un gaz, caractérisé par le fait qu'il comporte une cloison (24) divisant ladite enceinte en deux chambres parcourues chacune par un courant de fumées et dont l'une contient le faisceau (71) parcouru par le gaz et dont l'autre contient au moins un faisceau (51, 52) de tubes surchauffeurs alimentés en vapeur sèche.

2. Appareil selon la revendication 1, caractérisé par le fait qu'il comporte, de part et d'autre de la cloison (24), des registres (81, 82) contrôlant les débits de fumées au travers de chacune des deux chambres.

3. Appareil selon l'une quelconque des revendications précédentes, caractérisé par le fait qu'il comporte, entre la chambre de combustion (22) et le faisceau de tubes (71) dans lesquels circule le gaz, des tubes écrans (45) faisant partie des tubes vaporisateurs et destinés à arrêter le rayonnement de la chambre de combustion.

4. Appareil selon l'une quelconque des revendications précédentes, caractérisé par le fait que le faisceau de tubes (71) dans lesquels circule le gaz comprend au moins une entrée de gas (74, 75) comprise entre l'entrée (72) dudit faisceau et la sortie (73) dudit faisceau dans l'enceinte.

5. Appareil selon l'une quelconque des revendications précédentes, caractérisé par le fait que, de part et d'autre de la cloison (24), il comporte deux faisceaux de tubes vaporisateurs (41, 42) qui reçoivent de l'eau préchauffée en parallèle.

6. Appareil selon l'une quelconque des revendications précédentes, caractérisé par le fait qu'il comporte deux faisceaux (51, 52) de tubes surchauffeurs alimentés en vapeur sèche et échauffés successivement par les fumées.

7. Appareil selon l'une quelconque des revendications précédentes, caractérisé par le fait qu'il comporte deux économiseurs secondaires (32, 33) séparés par la cloison (24) et qui fournissent de l'eau préchaufée aux faisceaux de tubes vaporisateurs (41, 42).

8. Appareil selon l'une quelconque des revendications précédentes, caractérisé par le fait qu'il comporte, en aval des registres et de la cloison, un faisceau de tubes économiseurs (31) échauffés par les fumées sortant des deux chambres, cet économiseur (31) étant alimenté par de l'eau d'alimentation et fournissant de l'eau préchaufée aux économiseurs secondaires (32, 33).

9. Appareil selon l'une quelconque des revendications précédentes, caractérisé par le fait que les économiseurs secondaires (32, 33) sont branchés en parallèle sur l'économiseur primaire (31).

10. Appareil selon l'une quelconque des revendications précédentes, caractérisé par le fait que les circuits d'eau et de vapeur sont timbrés à au moins 120 bars.

11. Appareil selon l'une quelconque des revendications précédentes, comportant un dispositif de recyclage des fumées prélevées au niveau des registres et réinjectées à l'amont du faisceau de tubes (71) parcourus par un gaz.

12. Application de l'appareil conforme à l'une quelconque des revendications précédentes, à une installation de raffinage, caractérisée par le fait que le faisceau amont de tubes surchauffeurs (52) alimenté en vapeur sèche alimente une turbine à vapeur et que le faisceau aval de tubes surchauffeurs (51) alimente au moins une unité de traitement de l'installation.

**Patentansprüche**

1. Erhitzer für eine Wasserdampf und ein Heissgas verwendende Anlage mit einer Verbrennungskammer (22), aus der in einem Behälter (21) umlaufende Rauchgase austreten, die beim Durchlaufen ein Bündel mit Verdampfungsröhren (41, 42), die einem überhitzten Wasserdampf gebenden Überhitzer-Rohrbündel (51, 52) Wasserdampf liefern, sowie ein von einem Gas durchströmtes Rohrbundel (71) erhitzen, dadurch gekennzeichnet, dass der Erhitzer eine Wand (24) aufweist, die den genannten Behälter in zwei Kammern teilt, die jeweils von einem Rauchgasstrom durchlaufen werden, wobei eine der Kammern das vom Gas durchströmte Rohrbündel (71) und die andere Kammer mindestens ein Bündel (51, 52) von mit Trockendampf versorgten Überhitzer-Röhren enthält.

2. Erhitzer nach Anspruch 1 dadurch gekennzeichnet, dass er zu beiden Seiten der Trennwand (24) die Rauchgasdurchsätze in jeder der beiden Kammern steuernde Schieber (81, 82) aufweist.

3. Erhitzer nach irgendeinem der vorgenannten Ansprüche dadurch gekennzeichnet, dass er zwischen der Verbrennungskammer (22) und dem vom Gas durchströmten Rohrbündel (71) Abschirmröhren (45) aufweist, die zu den Verdampfungsröhren gehören une die Abstrahlung der Verbrennungskammer auffangen sollen.

4. Erhitzer nach irgendeinem der vorgenannten Ansprüche dadurch gekennzeichnet, dass das vom Gas durchströmte Rohrbündel (71) zwischen dem Eintritt (72) des genannten Rohrbündels in den Behälter und dem Austritt (73) des genannten Rohrbündels aus dem Behälter mindestens einen Gaseintritt (74, 75) aufweist.

5. Erhitzer nach irgendeinem der vorgenannten Ansprüche dadurch gekennzeichnet, dass er zu beiden Seiten der Wand (24) zwei Verdampfungsrohrbündel (41, 42) aufweist, die parallel vorerhitztes Wasser erhalten.

6. Erhitzer nach irgendeinem der vorgenannten Ansprüche dadurch gekennzeichnet, dass er zwei Bündel (51, 52) mit Überhitzer-Röhren aufweist, die mit Trockendampf versorgt und nacheinander durch die Rauchgase erhitzt werden.

7. Erhitzer nach irgendeinem der vorgenannten Asprüche dadurch gekennzeichnet, dass er zwei durch die Wand (24) getrennt Sekundär-Vorwärmer (32, 33) aufweist, die den Verdampfungsrohrbündeln (41, 42) vorerhitztes Wasser liefern.

8. Erhitzer nach irgendeinem der vorgenannten Ansprüche dadurch gekennzeichnet, dass er nach den Schiebern und der Wand ein Bündel mit Vorwärmer-Röhren (31) aufweist, die durch die aus den beiden Kammern austretenden Rauchgase erhitzt werden, wobei dieses Vorwärmer- Rohrbündel (31) durch Speisewasser versorgt wird und den Sekundär-Vorwärmern (32, 33) vorerhitztes Wasser liefert.

9. Erhitzer nach irgendeinem der vorgenannten Ansprüche dadurch gekennzeichnet, dass die Sekundär-Vorwärmer (32, 33) parallel an den Primär-Vorwärmer (31) angeschlossen sind.

10. Erhitzer nach irgendeinem der vorgenannten Ansprüche dadurch gekennzeichnet, dass Wasser- und Dampfkreise mindestens 120 bar Druck aufweisen.

11. Erhitzer nach irgendeinem der vorgenannten Ansprüche mit einer Rückführungsvorrichtung für die auf Schieberhöhe entnommenen und vor dem von einem Gas durchströmten Rohrbündel (71) wieder eingeführten Rauchgase.

12. Anwendung des Erhitzers gemäss irgendeinem der vorgenannten Ansprüche auf eine Raffinationsanlage, dadurch gekennzeichnet, dass das mit Trockendampf versorgte vorgeordnete Bündel mit Überhitzer-Röhren (52) eine Dampfturbine versorgt und das nachgeordnete Bündel mit Überhitzer-Röhren (51) mindestens eine Aufbereitungseinheit der Anlage versorgt.

**Claims**

1. Heating apparatus for use with an installation using water vapour and a hot gas and including a combustion chamber (22) out of which waste gases pass which circulate within an enclosure (21) and during their passage provide heating of a bundle of vaporising tubes (41, 42), which supply water vapour to a bundle of super-heating tubes (51, 52) which provides super-heated vapour and a bundle of tubes (71) through which a gas passes, characterised by the fact that it includes a partition (24) which divides said enclosure into two chambers through each of which a flow of waste gases occurs and of which one contains the bundle (71) through which the gas passes and the other of which contains at least one bundle (51, 52) of super-heating tubes which are supplied with dry vapour.

2. Apparatus according to claim 1, characterised by the fact that it includes, on each side of the partition (24), damper units (81, 82) which control the flow of the waste gases through each one of the two chambers.

3. Apparatus according to any one of the preceding claims characterised by the fact that it includes screening tubes (45) which constitute part of the vapourising tubes and are intended to stop radiation from the combustion chamber, said screening tubes being located between the combustion chamber (22) and the bundle of tubes (71) in which the gas circulates.

4. Apparatus according to any one of the preceding claims, characterised by the fact that the bundle of tubes (71) in which the gas circulates includes at least one gas entry point (74, 75) located between the entry (72) to said bundle and the outlet (73) from said bundle into the enclosure.

5. Apparatus according to any one of the preceding claims, characterised by the fact that on both sides of the partition (24) there are included two bundles of vaporising tubes (41, 42), which receive pre-heated water in parallel.

6. Apparatus according to any one of the preceding claims, characterised by the fact that it includes two bundles (51, 52) of super-heating tubes which are supplied with dry vapour and are successively heated up by the waste gases.

7. Apparatus according to any one of the preceding claims, characterised by the fact that it includes two secondary enonomisers (32, 33) separated by the partition (24) and which supply pre-heated water to the bundles of vaporising tubes (41, 42).

8. Apparatus according to any one of the preceding claims, characterised by the fact that it includes downstream of the damper units and of the partition, a bundle of economiser tubes (31) which are heated by the waste gases leaving the two chambers, this economiser (31) being supplied with feed water and furnishing preheated water to the secondary economisers (32, 33).

9. Apparatus according to any one of the preceding claims, characterised by the fact that the secondary economisers, (32, 33) are connected in parallel with the primary economiser (31).

10. Apparatus according to any one of the preceding claims, characterised by the fact that the water and the vapour circuits are tested at at least 120 bars.

11. Apparatus according to any one of the preceding claims, including a re-cycling device for the waste gases which are removed at the position of said damper unts and re-injected upstream of the bundle of tubes (71) through which a gas passes.

12. Application of the apparatus according to any one of the above claims to a refining plant, characterised by the fact that the upstream bundle of super-heating tubes (52) which is supplied with dry vapour feeds a steam turbine and that the downstream bundle of super heating tubes (51) supplies at least one treatment unit of the plant.

Fig1

Fig 2

0012654

Fig3

0012654

Fig 4

Fig 5

0012654